# EUROPEAN PATENT APPLICATION

(11) **EP 2 750 390 A2**
(43) Date of publication of application: **02.07.2014**
(21) Application number: 13195436.4
(22) Date of filing: 03.12.2013
(51) Int. Cl.: H04N 13/02, G02B 5/30

(54) **Imaging device and stereo camera**

(30) Priority: 25.12.2012 JP 2012281697
(71) Applicant: Ricoh Company Ltd., Tokyo 143-8555 (JP)
(72) Inventor: Kasahara, Ryosuke, Tokyo, 143-8555 (JP)
(74) Representative: Schwabe - Sandmair - Marx

(57) **Abstract**

An imaging device receives respective polarization components of light in first and second polarization directions perpendicular to one another, includes a birefringent plate for branching light incident from the same optical path into a polarization component having the first polarization direction and a polarization component having the second polarization direction; an area divided filter having a plurality of first polarizer areas transmitting only the polarization component having the first polarization direction and a plurality of second polarizer areas transmitting only the polarization component having the second polarization direction, arranged to correspond to a grid pattern of a plurality of light receiving elements; and an imaging element having the plurality of light receiving elements two-dimensionally arranged. The plurality of light receiving elements in the imaging element receive the respective polarization components of light in the first and second polarization directions transmitted by the area divided filter.

## Description

### BACKGROUND OF THE INVENTION

### 1. Field of the Invention

The present invention relates to an imaging device and a stereo camera.

### 2. Description of the Related Art

There is an imaging device that takes images of polarization components of light having different polarization directions and obtains a polarized image. Japanese Laid-Open Patent Application No. 2010-243463 discloses a technology of using two imaging parts (imaging elements). A first imaging part thereof detects an s-polarized component (or a p-polarized component), a second imaging part thereof detects an s-polarized component (or a p-polarized component), and a stereo image (parallax image) is generated using the polarization component thus detected by the first imaging part and the polarization component thus detected by the second imaging part. Therewith, the position of a subject is detected.

### SUMMARY OF THE INVENTION

According to one embodiment, an imaging device receives a polarization component of light having a first polarization direction and a polarization component of light having a second polarization direction perpendicular to the first polarization direction, respectively. The imaging device includes a birefringent plate that branches light incident from an optical path into a polarization component having the first polarization direction and a polarization component having the second polarization direction; an area divided filter that has a first division having a first polarizer area and a second division having a second polarizer area, the first polarizer area transmitting only the polarization component having the first polarization direction and the second polarizer area transmitting only the polarization component having the second polarization direction; and an imaging element having a plurality of light receiving elements that are arranged two-dimensionally. The area divided filter has a plurality of the first polarizer areas and a plurality of the second polarizer areas that are arranged to correspond to a grid pattern of the plurality of light receiving elements, the first polarizer areas and the second polarizer areas in the area divided filter transmit the polarization component of light having the first polarization direction and the polarization component of light having the second polarization direction, branched by the birefringent plate, respectively, and the plurality of light receiving elements in the imaging element receive the polarization component of light having the first polarization direction and the polarization component of light having the second polarization direction, transmitted by the area divided filter, respectively.

Other objects, features and advantages of the present invention will become more apparent from the following detailed description when read in conjunction with the accompanying drawings.

### BRIEF DESCRIPTION OF THE DRAWINGS

FIGs. 1A and 1B show a general configuration of one example of an imaging device according to a first embodiment;
FIGs. 2A, 2B and 2C show a general plan view of one example of the imaging device according to the first embodiment;
FIG. 3 illustrates one example of operations in the imaging device according to the first embodiment;
FIG. 4 illustrates one example of a result (polarized image) obtained from taking an image using the imaging device according to the first embodiment;
FIGs. 5A and 5B illustrate one example of operations in an imaging device according to a second embodiment;
FIGs. 5C and 5D illustrate one example of operations in an imaging device according to a first variant of the second embodiment;
FIGs. 6A and 6B illustrate one example of operations in an imaging device according to a second variant of the second embodiment;
FIGs. 6C and 6D illustrate one example of operations in an imaging device according to a third variant of the second embodiment;
FIGs. 7A and 7B illustrate one example of operations in an imaging device according to a third embodiment;
FIGs. 7C and 7D illustrate one example of operations in an imaging device according to a first variant of the third embodiment;
FIGs. 8A and 8B illustrate one example of operations in an imaging device according to a second variant of the third embodiment;
FIGs. 8C and 8D illustrate one example of operations in an imaging device according to a third variant of the third embodiment;
FIGs. 9A and 9B illustrate one example of operations in an imaging device according to a fourth embodiment;
FIGs. 10A and 10B illustrate one example of operations in an imaging device according to a fifth embodiment;
FIGs. 11A and 11B illustrate one example of operations in an imaging device according to a sixth embodiment;
FIGs. 12A and 12B illustrate one example of operations in an imaging device according to a variant of the fifth embodiment;
FIG. 13 shows a general configuration of one example of a stereo camera according to a seventh embodiment;
FIG. 14 illustrate one example of operations in the stereo camera according to the seventh embodiment; and
FIG. 15 illustrates one example of operations in an imaging device according to a comparative example.

### DETAILED DESCRIPTION OF THE EMBODIMENTS

First, a problem to be solved by the embodiments and variants will be described.

According to the above-mentioned technology disclosed by Japanese Laid-Open Patent Application No. 2010-243463, an area divided filter is used which corresponds to an arrangement in the imaging elements in the first or second imaging parts. In this configuration, a polarization component of light having a first polarization direction (for example, an s-polarized component) and a polarization component of light having a second polarization direction (for example, a p-polarized component) perpendicular to the first polarization direction are transmitted by the area divided filter.

Further, the thus-transmitted components of light are received by the imaging elements, respectively, as they are. That is, by using the area divided filter, the polarization directions of the incident light are made different for the respective pixels in the imaging elements, and the optical paths of the incident light are different for the respective pixels.

In this configuration, there is a case where it is not possible to obtain a desired polarization component of light for one pixel (optical path).

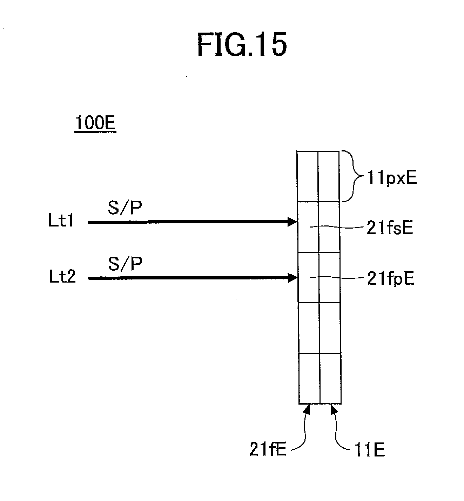

Specifically, an imaging device 100E shown in FIG. 15 will now be assumed, for example, as a comparative example.

In this imaging device 100E, an s-polarizer area 21 fsE in an area divided filter 21fE transmits an s-polarized component of light Lt1. The s-polarized component of light Lt1 thus transmitted by the s-polarizer area 21 fsE is received by an imaging element 11E.

Similarly, a p-polarizer area 21 fpE in the area divided filter 21 fE transmits a p-polarized component of light Lt2. The p-polarized component of light Lt2 thus transmitted by the p-polarizer area 21fpE is received by the imaging element 11E.

In this case, from the light Lt1, it is possible to receive the s-polarized component, but it is not possible to receive the p-polarized component from the same light Lt1 (i.e., from the same optical path). Similarly, from the light Lt2, it is possible to receive the p-polarized component, but it is not possible to receive the s-polarized component from the same light Lt2 (i.e., from the same optical path). Thus, in this case, it is not possible to receive (obtain) both the s-polarized component and the p-polarized component from one optical path.

In such a case where it is not possible to receive (obtain) both the s-polarized component and the p-polarized component from one optical path, a problem may occur. That is, there may be a case where, for example, when a polarized image is generated, an error increases remarkably for an area of an image where a subject of the image is not flat (for example, an edge area, a texture area or the like).

Further, in a case of using a monocular camera that uses polarization light, an error may occur in a polarization ratio for an edge area or a texture area when the polarization ratio is calculated using respective polarization components of incident light obtained from different positions (pixels) instead of using a polarization component of incident light obtained from the same position (pixel).

The embodiments and variants have been devised in consideration of the above-mentioned problem, and an object of the embodiments and variants is to provide imaging devices with which it is possible to improve accuracy in a polarized image by receiving a polarization component of light having a first polarization direction and a polarization component of light having a second polarization direction perpendicular to the first polarization direction of light incident from the same optical path.

The embodiments and variants will now be described, for an illustrative purpose, and not to be used to limit the present invention, using imaging devices that receive a polarization component of light having a first polarization direction and a polarization component of light having a second polarization direction perpendicular to the first polarization direction, respectively.

The present invention can be applied not only to imaging devices described later but also to optical systems, optical members, prisms, mirrors, and parts/components (devices, members, units, systems and so forth) used to polarize light included inside image forming apparatuses, recording apparatuses, copiers, multifunction peripherals, printers, scanners, projectors and so forth.

Note that, hereinafter, the same or corresponding reference numerals/characters will be used for the same or corresponding members/parts/components throughout the drawings attached hereto, and duplicate descriptions will be omitted.

Note that the drawings are not for the purpose of showing relative ratios between members/parts/components. Specific dimensions can be freely determined by the persons skilled in the art in light of the embodiments and variants described below that are not to be used to limit the present invention.

### (First Embodiment)

### (Configuration in Imaging Device)

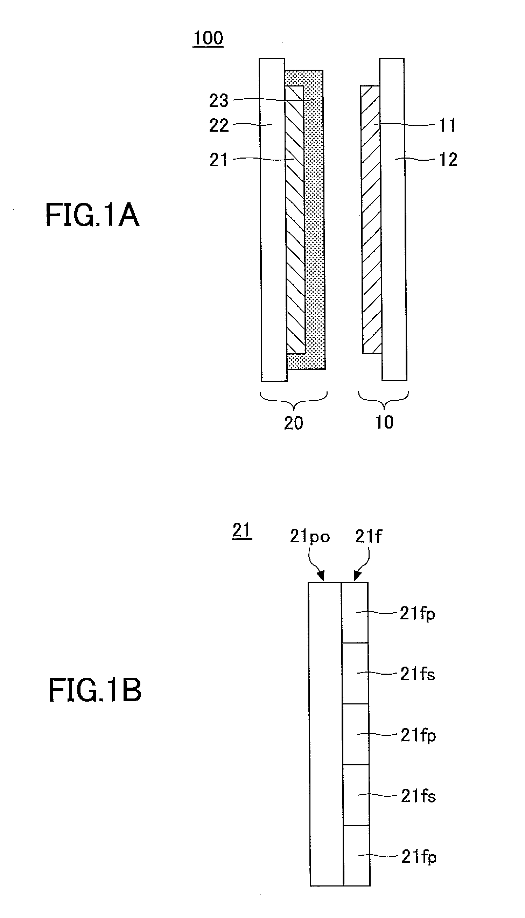

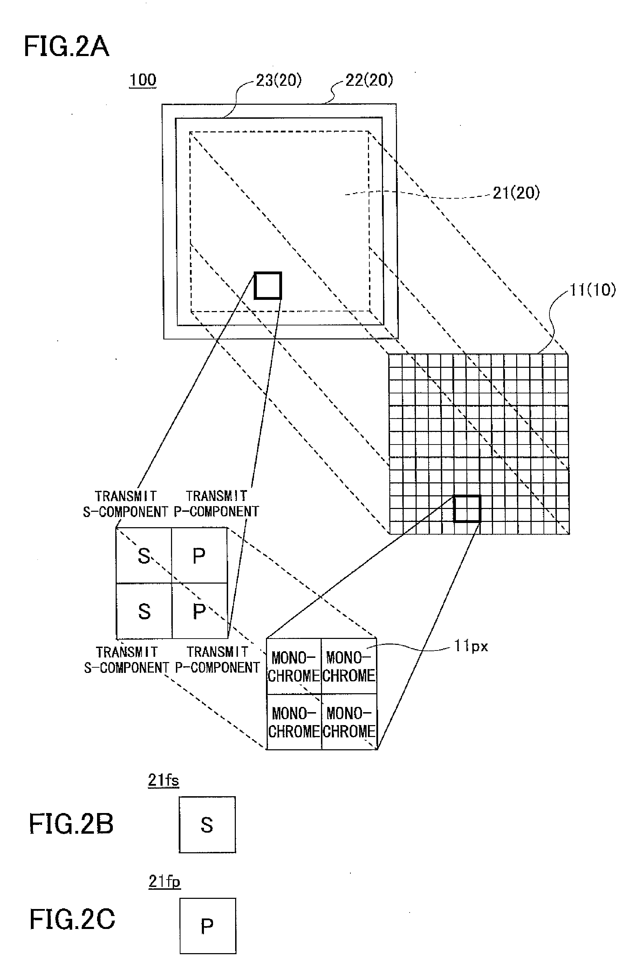

Using FIGs. 1A, 1B, 2A, 2B and 2C, an imaging device 100 according to a first embodiment will be described.

As shown in FIG. 1A, the imaging device 100 includes an imaging member 10 that receives light, and an optical filter 20 that changes characteristics of incident light.

The imaging member 10 receives light to obtain imaging data (hereinafter, referred to as "takes an image" or simply "images"). The imaging member 10 includes an imaging element 11 that includes a plurality of light receiving elements and a substrate 12 that supports the imaging element 11. According to the first embodiment, the imaging member 10 receives light using the imaging member 11 and takes an image of the received light.

As shown in FIG. 2A, the imaging element 11 has such a structure that the plurality of light receiving elements 11px are placed two-dimensionally on an incidence plane. According to the first embodiment, in the imaging element 11, a polarization component of light having a first polarization direction (for example, s-polarized component of light) and a polarization component of light having a second polarization direction perpendicular to the first polarization direction (for example, p-polarized component of light) transmitted by the optical filter 20 (i.e., an area divided filter 21 f, described later) are received at the plurality of light receiving elements 11px, respectively.

As the imaging element 11, it is possible to use, for example, a Charge Coupled Device (CCD), a Complementary Metal Oxide Semiconductor (CMOS) or the like. Note that although a monochrome (black and white) sensor will now be descried as the imaging element 11 (light receiving elements 11px), the imaging element 11 is not limited to such a monochrome sensor. That is, the imaging element to which the present invention can be applied may be a color sensor (for example, a color sensor having a Red, Clear, Clear and Clear (RCCC) pattern, a Bayer pattern, or the like), as will be described later concerning other embodiments.

The optical filter 20 changes characteristics of incident light by transmitting and/or reflecting the incident light. According to the first embodiment, the optical filter 20 includes a polarization filter layer 21 that polarizes incident light, a protection substrate 22 that protects the polarization filter layer 21, and a filling layer 23 that joins the polarization filter layer 21 and the protection substrate 22.

The optical filter 20 polarizes incident light into a polarization component of light having a first polarization direction and a polarization component of light having a second polarization direction perpendicular to the first polarization direction. According to the first embodiment, in the optical filter 20, the polarization filter layer 21 transmits light, and thus, polarizes the incident light into an s-polarized component of light and a p-polarized component of light.

As shown in FIG. 1B, the polarization filter layer 21 includes a birefringent plate (polarizer) 21po and an area divided filter 21f.

The birefringent plate 21po branches incident light into a polarization component having the first polarization direction and a polarization component having the second polarization direction perpendicular to the first polarization direction (for example, an s-polarized component and a p-polarized component).

The area divided filter 21f includes first polarizer areas 2 1 fs and second polarizer areas 21fp (see FIGs. 1B, 2B and 2C) as divisions thereof. The first polarizer areas 21 fs transmit only a polarization component of light having the first polarization direction and the second polarizer areas 21fp transmit only a polarization component of light having the second polarization direction.

The above-mentioned first polarization direction is, for example, a horizontal direction coincident with the horizontal direction in the grid pattern of the plurality of light receiving elements 11px in FIG. 2A. The above-mentioned second polarization direction is a vertical direction coincident with the vertical direction in the grid pattern of the plurality of light receiving elements 11px in FIG. 2A.

Hereinafter, an angle of any of the above-mentioned first polarization direction and second polarization will be referred to as a "polarization transmission angle".

According to the first embodiment, the "polarization transmission angles" in the area divided filter 21f are 0 degrees and 90 degrees with respect to the vertical or horizontal direction in the grid pattern. That is, in the above-mentioned example, the first polarizer areas 21fs have the polarization transmission angle of 0 degrees with respect to the horizontal direction in the grid pattern, and the second polarizer areas 21fp have the polarization transmission angle of 90 degrees with respect to the horizontal direction in the grid pattern.

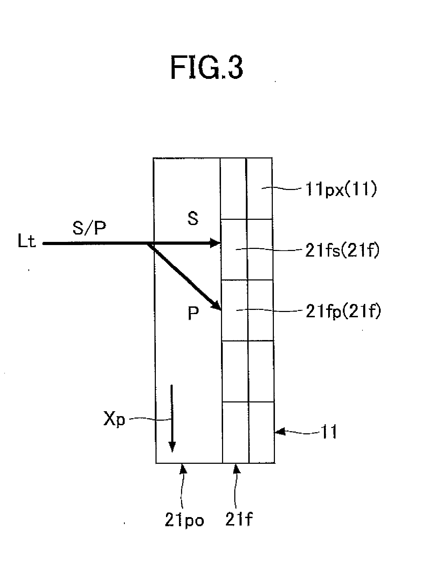

The birefringent plate 21po branches light that has been incident from the same optical paths. According to the first embodiment, the birefringent plate 21po separates (branches) incident light into polarization components that are perpendicular to one another, for example, an s-polarized component and a p-polarized component (see FIG. 3, described later).

As the birefringent plate 21po, it is possible to use a member made of quartz crystal, calcite or the like.

Note that a direction of branching light by the birefringent plate 21po (hereinafter, referred to as a "refraction direction") and a distance of branching light by the birefringent plate 21po (hereinafter, referred to as a "shift amount") may be those corresponding to a manner of dividing the area divided filter 21f into the respective polarizer areas 2 1 fs and 21fp.

Further, the refraction direction and the shift amount in the birefringent plate 21po can be adjusted by appropriately changing the crystal axis, the thickness and/or the like of the birefringent plate 21po.

The area divided filter 21f transmits incident light selectively. According to the first embodiment, the area divided filter 21f has the divisions that include, as shown in FIG. 1B, the s-polarizer areas 21fs (see FIG. 2B) transmitting only an s-polarized component of light having the first polarization direction; and the p-polarizer areas 21fp (see FIG. 2C) transmitting only a p-polarized component of light having the second polarization direction.

Note that in the imaging device 100 according to the first embodiment, the area divided filter 21f is included inside the optical filter 20 (see FIGs. 1A and 1B). However, an imaging device 100 to which the present invention can be applied may also have such an arrangement that the area divided filter 21f is placed on the light receiving surface of the imaging member 10 (imaging element 11).

According to the first embodiment, in the area divided filter 21f, the plurality of s-polarizer areas 21 fs and the plurality of p-polarizer areas 21 fp are arranged to correspond to the grid pattern (see FIG. 2A) of the plurality of light receiving elements 11px. That is, the area divided filter 21 f is formed by a plurality of polarizers corresponding to pixel sizes (i.e., sizes in the light receiving elements 11px, i.e., the pixels, see FIG. 2A), respectively.

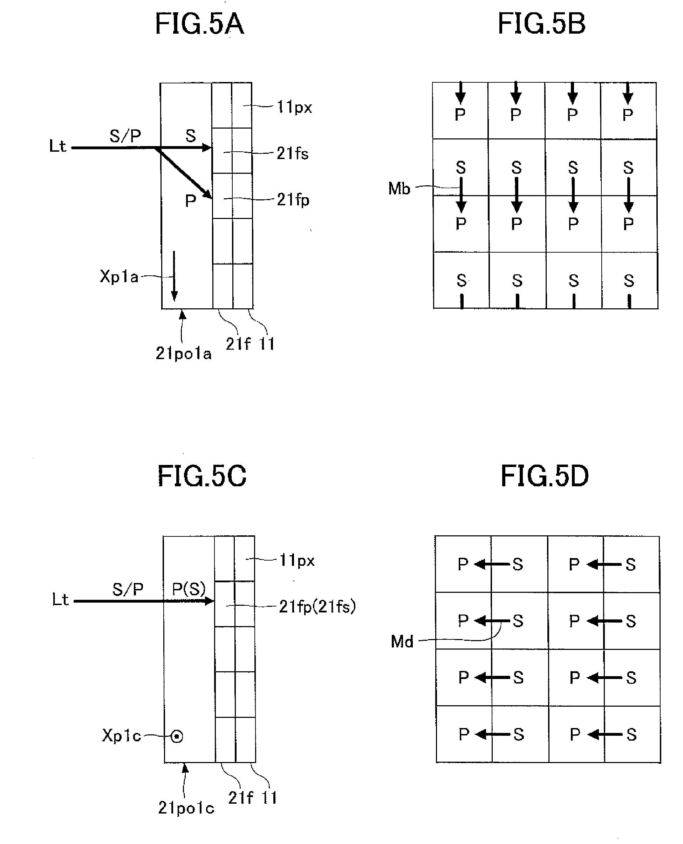

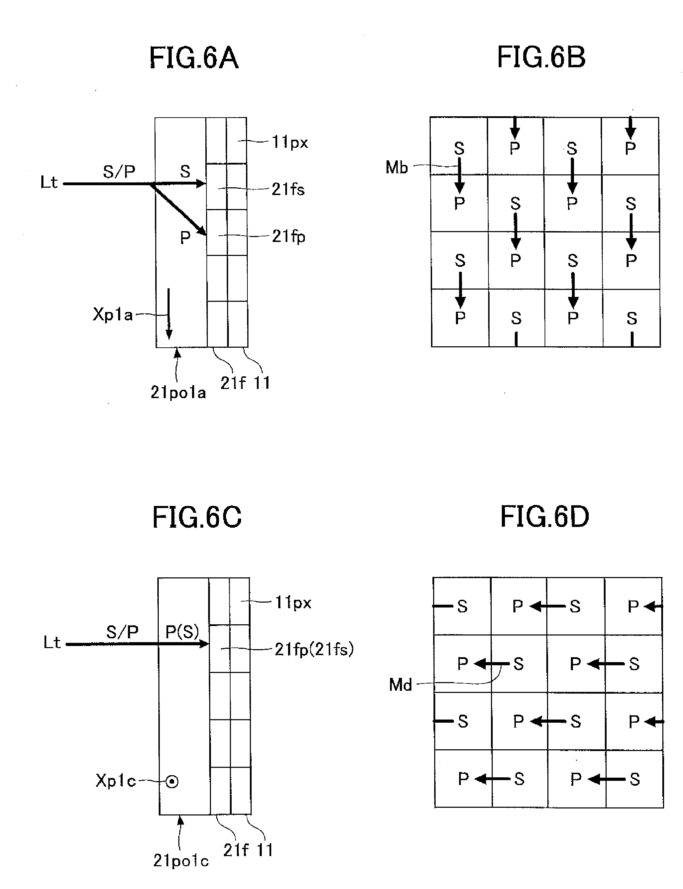

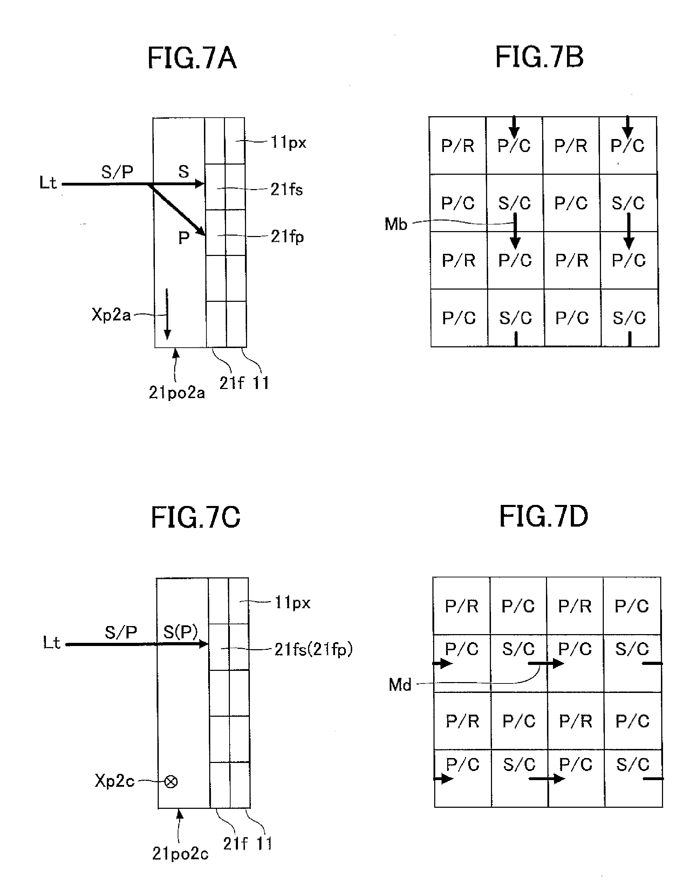

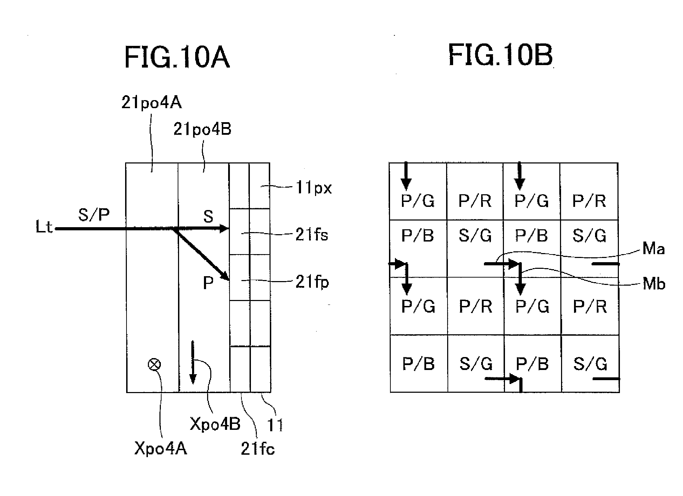

Note that the area divided filter 21f can have such a structure that the plurality of s-polarizer areas 21 fs and the plurality of p-polarizer areas 21 fp are arranged in a form of rows (see FIG. 5B, described later), in a form of columns (see FIG. 5D, described later), alternately (see FIG. 6B, described later) or dispersively (see FIG. 7B or 10B, described later).

The protection substrate 22 protects the polarization filter layer 21 (including the birefringent plate 21po and the area divided filter 21f, see FIG. 1B). Further, the protection substrate 22 is transparent and transmits light incident on the polarization filter layer 21.

Note that as the material of the protection substrate 22, it is possible to use a transparent material that can transmit light in an operating wavelength band (for example, the visible light band and the infrared band). The transparent material is, for example, glass, sapphire, quartz crystal, quartz glass, tempax glass, plastic, engineering plastic, synthetic resin or the like.

The filling layer 23 is used to fix the birefringent plate 21po to the protection layer 22 (and the imaging member 10). That is, as shown in FIGs. 1A and 1B, the filling layer 23 is formed to cover the birefringent plate 21po (see FIGs. 1A and 1B). Note that, as the filling layer 23, an adhesive excellent in translucency, adhesiveness to glass and precision, or the like, can be used.

The imaging device 100 according to the first embodiment branches (separates) light incident from the same optical paths into an s-polarized component of light and a p-polarized component of light using the birefringent plate 21po.

Further, the imaging device 100 according to the first embodiment transmits, using the area divided filter 21f, the s-polarized component of light and the p-polarized component of light branched by the birefringent plate 21po at the s-polarizer areas 21fs and the p-polarizer areas 21fp, respectively.

Thus, using the plurality of light receiving elements 11px of the imaging element 11, the imaging device 100 can receive, at some of (a first group of) the light receiving elements 11px (in the imaging element 11), only an s-polarized component (polarization component having the first polarization direction); and, at others of (a second group of) the light receiving elements 11px (in the imaging element 11), only a p-polarized component (polarization component having the second polarization direction), of light incident from the same optical paths.

### (Operations in Imaging Device)

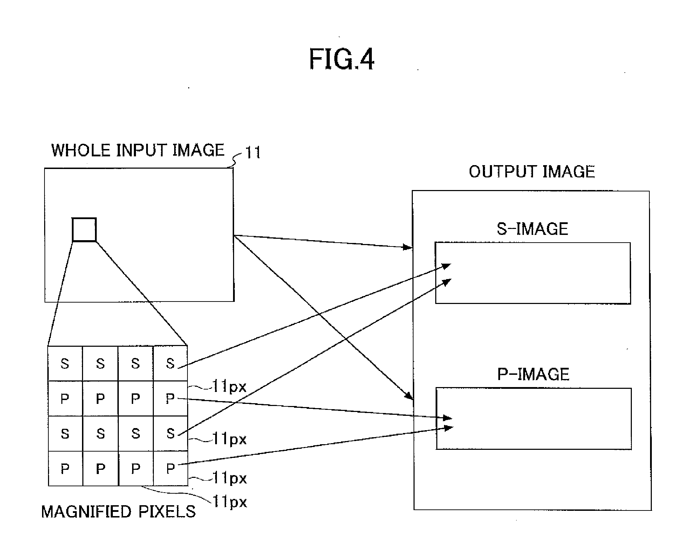

Using FIGs. 3 and 4, operations in the imaging device 100 for taking a polarized image will now be described.

As shown in FIG. 3, first, light Lt is incident on the birefringent plate 21po in the imaging device 100. At this time, in the imaging device 100, the birefringent plate 21 po transmits the light Lt in such a manner that the light Lt is branched into the s-polarized component and the p-polarized component.

Specifically, according to the first embodiment, the birefringent plate 21po separates (branches) the light Lt, incident from one optical path, in a deflection direction Xp. That is, the birefringent plate 21po transmits the s-polarized component of light as it is, and refracts (transmits) the p-polarized component of light in the deflection direction Xp.

Next, the imaging device 100 causes the s-polarized component of light and the p-polarized component of light to be incident on the area divided filter 21f, respectively. Thus, the s-polarized component of light and the p-polarized component of light are incident on the imaging element 11 separately.

Specifically, using the s-polarizer areas 21fs and the p-polarized areas 21fp in the area divided filter 21f, the imaging device 100 causes the s-polarized component of light to be selectively incident on the first group of the respective light receiving elements 11px in the imaging element 11; and causes the p-polarized component of light to be selectively incident on the second group of the respective light receiving elements 11px in the imaging element 11.

Note that as shown in FIGs. 2A, 2B, 2C and 3, the first group of the respective light receiving elements 11px receiving the s-polarized component of light are placed to correspond to the positions of the s-polarizer areas 21fs. Similarly, the second group of the respective light receiving elements 11px receiving the p-polarized component of light are placed to correspond to the positions of the p-polarizer areas 2 1 fs.

Thus, in the imaging device 100, the imaging element 11 (i.e., the light receiving elements 11px) receives the light that has been transmitted by the optical filter 20 (birefringent plate 21po).

That is, as shown in FIG. 4, for the "whole input image", the first group of the respective light receiving elements 11px (pixels) receive only the s-polarized component of light and the second group of the respective light receiving elements 11px (pixels) receive only the p-polarized component of light.

Thereafter, the imaging device 100 generates, as an "output image", an s-polarized image ("s-image") using only the s-polarized component of light (the data corresponding to the thus taken image) received by the first group of the respective light receiving elements 11px and a p-polarized image ("p-image") using only the p-polarized component of light (the data corresponding to the thus taken image) received by the second group of the respective light receiving elements 11px.

In this configuration according to the first embodiment, it is possible to generate the s-image and the p-image of the light Lt incident from the same optical paths.

Therefore, the imaging device 100 can calculate the luminance ratio between the pixels in the generated s-image and the pixels in the generated p-image corresponding to the same optical paths.

As a result, the imaging device 100 can obtain (calculate) the polarization ratio and so forth accurately not only for a flat area but also for a discontinuous object such as an edge area, a texture area and so forth.

The imaging device 100 may calculate a color image or a luminance image by using the generated s-image and/or p-image.

In a case of using, for example, an imaging element 11 having a color filter, the imaging device 100 may extract only pixels of p-polarized light or s-polarized light, and calculate luminance values through simple averaging or weighted averaging using these pixels (for example, apparent luminance values).

Note that in a case of using the imaging device 100 in a stereo camera 200 (for example, see a seventh embodiment described later), the generated s-image and p-image can be used as a parallax image (a difference image, an image having a parallax).

Thus, according to the imaging device 100 in the first embodiment, it is possible to receive a polarization component (for example, an s-polarized component) of light having a first polarization direction and a polarization component (for example, a p-polarized component) of light having a second polarization direction perpendicular to the first embodiment of light incident from the same optical paths, respectively.

Further, according to the imaging device 100 in the first embodiment, it is thus possible to receive a polarization component of light having a first polarization direction and a polarization component of light having a second polarization direction perpendicular to the first embodiment of light incident from the same optical paths, respectively. Therefore, it is possible to improve the accuracy in a polarized image to be thus obtained.

### (Other Embodiments)

Next, imaging devices according to other embodiments and variants will now be described.

Note that the imaging devices according to the other embodiments and variants are basically the same as the imaging device 100 according to the first embodiment described above. Therefore, mainly differences from the first embodiment will be described.

### (Second Embodiment)

Using FIGs. 5A and 5B, an imaging device according to a second embodiment using a monochrome sensor as an imaging element (imaging member) will be described.

### (Configuration of Imaging Device)

FIGs. 5A and 5B partially show a side sectional view and a plan view, respectively, of an imaging device according to the second embodiment.

As shown in FIG. 5B, s-polarizer areas 21fs ("S") and p-polarizer areas 21fp ("P") in an area divided filter 21f are arranged in a form of rows (i.e., a horizontal stripe pattern).

Thus, the arrangement of the-polarizer areas 21fs and p-polarizer areas 21fp in the area divided filter 21f is the same as the first embodiment shown in FIG. 4.

### (Operations in Imaging Device)

As shown in FIG. 5A, in the imaging device according to the second embodiment, first, light Lt is incident on a birefringent plate 21po1a.

At this time, the birefringent plate 21po1a branches the light Lt incident from the same optical paths.

That is, as in the first embodiment described above using FIG. 3, the birefringent plate 21po1a transmits the s-polarized component of light as it is, and refracts (transmits) the p-polarized component of light in a deflection direction Xp1a (a refraction direction Mb in FIG. 5B, i.e., a vertical direction).

Next, using the s-polarizer areas 21fs and the p-polarizer areas 21fp in the area divided filter 21f, the imaging device causes only the s-polarized component of light to be incident on some of (a first group of) respective light receiving elements 11px in an imaging element 11 selectively; and causes only the p-polarized component of light to be incident on others of (a second group of) the respective light receiving elements 11px in the imaging element 11 selectively.

Thus, using the imaging element 11, the imaging device can receive light (take an image) of only the s-polarized component of the light Lt incident from the same optical paths at the first group of the respective light receiving elements 11px (pixels) in the imaging element; and can receive light (take an image) of only the p-polarized component of the light Lt incident from the same optical paths at the second group of the respective light receiving elements 11px (pixels) in the imaging element.

Specifically, according to the second embodiment, the imaging device can receive the s-polarized component and the p-polarized component of the light Lt incident from the same optical paths at the first group and the second group of the respective light receiving elements 11px (pixels) having the coordinates corresponding to the base points and the end points of the arrows showing the refraction direction Mb shown in FIG. 5B, respectively.

Further, the imaging device can obtain the polarization ratio or the like by calculating the luminance ratio of the light received at the light receiving elements 11px (pixels) having the coordinates corresponding to the base points and having the coordinates corresponding to the end points of the arrows showing the refraction direction Mb.

Thus, according to the imaging device in the second embodiment, it is possible to obtain the same advantageous effects as those obtained from the first embodiment.

### (First Variant of Second Embodiment)

Using FIGs. 5C and 5D, an imaging device according to a first variant of the second embodiment will be described.

### (Configuration of Imaging Device)

FIGs. 5C and 5D partially show a side sectional view and a plan view, respectively, of an imaging device according to the first variant of the second embodiment.

As shown in FIG. 5D, s-polarizer areas 21fs ("S") and p-polarizer areas 21fp ("P") in an area divided filter 21f are arranged in a form of columns (i.e., a vertical stripe pattern).

### (Operations in Imaging Device)

As shown in FIG. 5C, in the imaging device according to the first variant of the second embodiment, first, light Lt is incident on a birefringent plate 21po1c. At this time, the birefringent plate 21po1c branches the light Lt incident from the same optical paths. That is, the birefringent plate 21po1c transmits the s-polarized component of light as it is, and refracts (transmits) the p-polarized component of light in a deflection direction Xp1c (a refraction direction Md in FIG. 5D, i.e., a horizontal direction).

Next, using the s-polarizer areas 21fs and the p-polarizer areas 21fp in the area divided filter 21f, the imaging device causes only the s-polarized component of light to be incident on some of (a first group of) respective light receiving elements 11px in an imaging element 11 selectively; and causes only the p-polarized component of light to be incident on others of (a second group of) the respective light receiving elements 11px in the imaging element 11 selectively.

Thus, using the imaging element 11, the imaging device can receive light (take an image) of only the s-polarized component of the light Lt incident from the same optical paths at the first group of the respective light receiving elements 11px (pixels) in the imaging element 11; and can receive light (take an image) of only the p-polarized component of the light Lt incident from the same optical paths at the second group of the respective light receiving elements 11px (pixels) in the imaging element 11.

Specifically, according to the first variant of the second embodiment, the imaging device can receive the s-polarized component and the p-polarized component of the light Lt incident from the same optical paths at the first group and the second group of the light receiving elements 11px (pixels) having the coordinates corresponding to the base points and the end points of the arrows showing the refraction direction Md shown in FIG. 5D, respectively.

Further, the imaging device can obtain the polarization ratio or the like by calculating the luminance ratio of the light received at the light receiving elements 11px (pixels) having the coordinates corresponding to the base points and having the coordinates corresponding to the end points of the arrows showing the refraction direction Md.

Thus, according to the imaging device in the first variant of the second embodiment, it is possible to obtain the same advantageous effects as those obtained from the first embodiment.

### (Second Variant of Second Embodiment)

Using FIGs. 6A and 6B, an imaging device according to a second variant of the second embodiment will be described.

### (Configuration of Imaging Device)

FIGs. 6A and 6B partially show a side sectional view and a plan view, respectively, of an imaging device according to the second variant of the second embodiment.

As shown in FIG. 6B, s-polarizer areas 21fs ("S") and p-polarizer areas 21fp ("P") in an area divided filter 21f are arranged alternately (i.e., a checkered pattern).

### (Operations in Imaging Device)

As shown in FIG. 6A, in the imaging device according to the second variant of the second embodiment, first, light Lt is incident on a birefringent plate 21po1a. At this time, the birefringent plate 21po1a branches the light Lt incident from the same optical paths. That is, as in the first embodiment described above using FIG. 3, the birefringent plate 21po1a transmits the s-polarized component of light as it is, and refracts (transmits) the p-polarized component of light in a deflection direction Xp1a (a refraction direction Mb in FIG. 6B, i.e., a vertical direction).

Next, using the s-polarizer areas 21 fs and the p-polarizer areas 21fp in the area divided filter 21f, the imaging device causes only the s-polarized component of light to be incident on some of (a first group of) respective light receiving elements 11px in an imaging element 11 selectively; and causes only the p-polarized component of light to be incident on others of (a second group of) the respective light receiving elements 11px in the imaging element 11 selectively.

Thus, using the imaging element, the imaging device can receive light (take an image) of only the s-polarized component of the light Lt incident from the same optical paths at the first group of the respective light receiving elements 11px (pixels) in the imaging element 11; and can receive light (take an image) of only the p-polarized component of the light Lt incident from the same optical paths at the second group of the respective light receiving elements 11px (pixels) in the imaging element 11.

Specifically, according to the second variant of the second embodiment, the imaging device can receive the s-polarized component and the p-polarized component of the light Lt incident from the same optical paths at the first group and the second group of the light receiving elements 11px (pixels) having the coordinates corresponding to the base points and the end points of the arrows showing the refraction direction Mb shown in FIG. 6B, respectively.

Thus, according to the imaging device in the second variant of the second embodiment, it is possible to obtain the same advantageous effects as those obtained from the first embodiment.

### (Third Variant of Second Embodiment)

Using FIGs. 6C and 6D, an imaging device according to a third variant of the second embodiment will be described.

### (Configuration of Imaging Device)

FIGs. 6C and 6D partially show a side sectional view and a plan view, respectively, of an imaging device according to the third variant of the second embodiment.

As shown in FIG. 6D, s-polarizer areas 21fs ("S") and p-polarizer areas 21fp ("P") in an area divided filter 21f are arranged alternately (i.e., a checkered pattern) the same as the second variant of the second embodiment described above using FIGs. 6A and 6B.

### (Operations in Imaging Device)

As shown in FIG. 6C, in the imaging device according to the third variant of the second embodiment, first, light Lt is incident on a birefringent plate 21po1c. At this time, the birefringent plate 21po1c branches the light Lt incident from the same optical paths. That is, the birefringent plate 21po1c transmits the s-polarized component of light as it is, and refracts (transmits) the p-polarized component of light in a deflection direction Xp1c (a refraction direction Md in FIG. 6D, i.e., a horizontal direction).

Next, using the s-polarizer areas 21 fs and the p-polarizer areas 21 fp in the area divided filter 21f, the imaging device causes only the s-polarized component of light to be incident on some of (a first group of) respective light receiving elements 11px in an imaging element 11 selectively; and causes only the p-polarized component of light to be incident on others of (a second group of) the respective light receiving elements 11px in the imaging element 11 selectively.

Thus, using the imaging element 11, the imaging device can receive light (take an image) of only the s-polarized component of the light Lt incident from the same optical paths at the first group of the respective light receiving elements 11px (pixels) in the imaging element 11; and can receive light (take an image) of only the p-polarized component of the light Lt incident from the same optical paths at the second group of the respective light receiving elements 11px (pixels) in the imaging element 11.

Specifically, according to the third variant of the second embodiment, the imaging device can receive the s-polarized component and the p-polarized component of the light Lt incident from the same optical paths at the first group and the second group of the light receiving elements 11px (pixels) having the coordinates corresponding to the base points and the end points of the arrows showing the refraction direction Md shown in FIG. 6D, respectively.

Thus, according to the imaging device in the third variant of the second embodiment, it is possible to obtain the same advantageous effects as those obtained from the first embodiment.

### (Third Embodiment)

Using FIGs. 7A and 7B, an imaging device according to a third embodiment using a color sensor as an imaging element 11 (imaging member 10) will be described.

According to the third embodiment, as a pattern in the color sensor, a Red, Clear, Clear and Clear (RCCC) pattern is used, for example.

Note that an arrangement pattern of a color sensor that can be used in an imaging element according to the present invention is not limited to such an RCCC pattern. That is, a color sensor that can be used in an embodiment may be one having any pattern corresponding to a plurality of colors such as a Red, Green and Blue (RGB) pattern, a Red, Green, Blue and Green (RGBG) pattern, or the like.

"Clear" ("C") pixels ("clear" ("C") light receiving elements) used in the above-mentioned RCCC pattern are light receiving elements to which no color filters are attached to be used for obtaining imaging data of pixels to which no color filters are attached, in consideration of the fact that sensitivity is degraded due to such color filters.

Note that light receiving elements may be referred to as "pixels" for convenience of explanation.

Such a RCCC pattern is a pattern in a color sensor such that only "red" ("R") pixels are added to a monochrome sensor for the purpose of identifying red in a tail lamp of a forward vehicle for a case where the imaging device according to the third embodiment is used in a car-mounted camera, for example.

### (Configuration of Imaging Device)

FIGs. 7A and 7B partially show a side sectional view and a plan view, respectively, of the imaging device according to the third embodiment.

As shown in FIG. 7B, s-polarizer areas 21fs ("S/C") and p-polarizer areas 21fp ("P/R", "P/C") in an area divided filter 21f are arranged dispersively to correspond to the pattern in the color sensor 11.

Specifically, in the area divided filter 21f according to the third embodiment, as shown in FIG. 7B, p-polarizer areas 21fp ("P/R" in FIG. 7B) are placed at the R pixels 11px in the color sensor 11.

Further, in the area divided filter 21f, for each set of the four pixels in the RCCC pattern, p-polarizer areas 21fp ("P/C" in FIG. 7B) are placed at the two C pixels 11px, respectively, and an s-polarizer area 21fs ("S/C" in FIG. 7B) is placed at the other one C pixel 11px.

### (Operations in Imaging Device)

As shown in FIG. 7A, in the imaging device according to the third embodiment, first, light Lt is incident on a birefringent plate 21po2a. At this time, the birefringent plate 21po2a branches the light Lt incident from the same optical paths. That is, the birefringent plate 21po2a transmits the s-polarized component of light as it is, and refracts (transmits) the p-polarized component of light in a deflection direction Xp2a (a refraction direction Mb in FIG. 7B, i.e., a vertical direction).

Next, using the s-polarizer areas 21fs and the p-polarizer areas 21fp in the area divided filter 21f, the imaging device causes only the s-polarized component of light to be incident on some of (a first group of) respective light receiving elements 11px in an imaging element 11 selectively; and causes only the p-polarized component of light to be incident on others of (a second group of) the respective light receiving elements 11px in the imaging element 11 selectively.

Thus, using the imaging element 11, the imaging device can receive light (take an image) of only the s-polarized component of the light Lt incident from the same optical paths at the first group of the respective light receiving elements 11px (pixels) (at the base points of the arrows showing the refraction direction Mb) in the imaging element 11; and can receive light (take an image) of only the p-polarized component of the light Lt incident from the same optical paths at the second group of the respective light receiving elements 11px (pixels) (at the end points of the arrows showing the refraction direction Mb) in the imaging element 11.

Thus, according to the imaging device in the third embodiment, it is possible to obtain the same advantageous effects as those obtained from the first embodiment.

### (First Variant of Third Embodiment)

Using FIGs. 7C and 7D, an imaging device according to a first variant of the third embodiment will be described.

### (Configuration of Imaging Device)

FIGs. 7C and 7D partially show a side sectional view and a plan view, respectively, of an imaging device according to the first variant of the third embodiment.

As shown in FIG. 7D, s-polarizer areas 21fs ("S/C") and p-polarizer areas 21 fp ("P/R", "P/C") in an area divided filter 21f are arranged dispersively to correspond to the pattern in the color sensor.

Specifically, in the area divided filter 21f according to the first variant of the third embodiment, as shown in FIG. 7D, p-polarizer areas 21fp ("P/R" in FIG. 7D) are placed at the R pixels in the color sensor 11.

Further, in the area divided filter 21f, for each set of the four pixels in the RCCC pattern, p-polarizer areas 21fp ("P/C" in FIG. 7D) are placed at the two C pixels, respectively, and an s-polarizer area 21fs ("S/C" in FIG. 7D) is placed at the other one C pixel.

### (Operations in Imaging Device)

As shown in FIG. 7C, in the imaging device according to the first variant of the third embodiment, first, light Lt is incident on a birefringent plate 21po2c. At this time, the birefringent plate 21po2c branches the light Lt incident from the same optical paths. That is, the birefringent plate 21po2c transmits the s-polarized component of light as it is, and refracts (transmits) the p-polarized component of light in a deflection direction Xp2c (a refraction direction Md in FIG. 7D, i.e., a horizontal direction).

Next, using the s-polarizer areas 21 fs and the p-polarizer areas 21 fp in the area divided filter 21f, the imaging device causes only the s-polarized component of light to be incident on some of (a first group of) respective light receiving elements 11px in an imaging element 11 selectively, and causes only the p-polarized component of light to be incident on others of (a second group of) the respective light receiving elements 11px in the imaging element 11 selectively.

Thus, using the imaging element 11, the imaging device can receive light (take an image) of only the s-polarized component of the light Lt incident from the same optical paths at the first group of the respective light receiving elements 11px (pixels) (at the base points of the arrows showing the refraction direction Md) in the imaging element 11; and can receive light (take an image) of only the p-polarized component of the light Lt incident from the same optical paths at the second group of the respective light receiving elements 11px (pixels) (at the end points of the arrows showing the refraction direction Md) in the imaging element 11.

Thus, according to the imaging device in the first variant of the third embodiment, it is possible to obtain the same advantageous effects as those obtained from the first embodiment.

### (Second Variant of Third Embodiment)

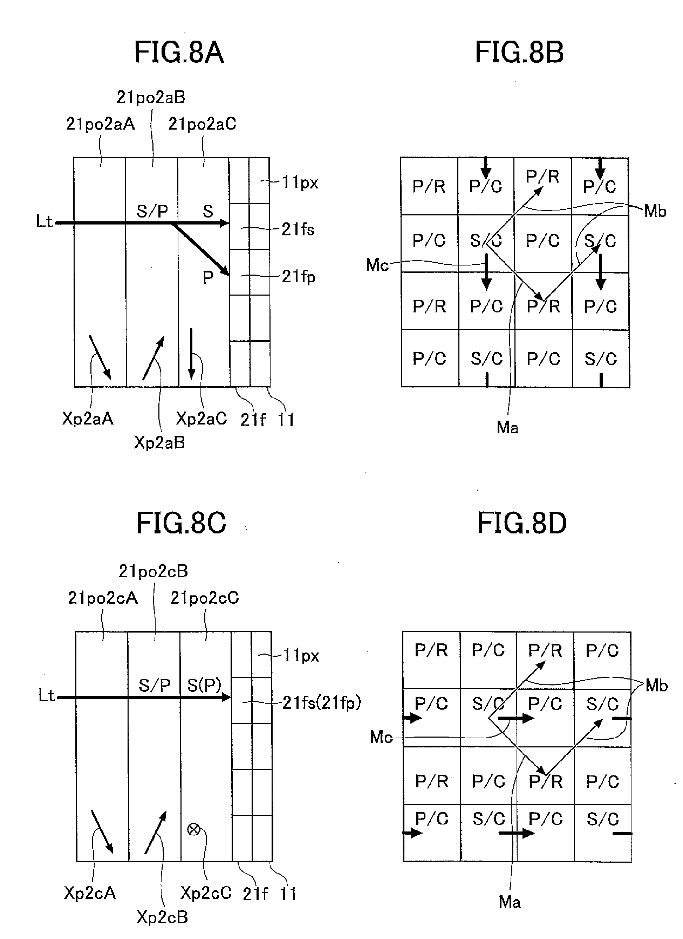

Using FIGs. 8A and 8B, an imaging device according to a second variant of the third embodiment will be described.

### (Configuration of Imaging Device)

FIGs. 8A and 8B partially show a side sectional view and a plan view, respectively, of an imaging device according to the second variant of the third embodiment.

As shown in FIG. 8A, in the imaging device according to the second variant of the third embodiment, optical lowpass filters 21po2aA and 21po2aB are provided on an incident side of a birefringent plate 21po2aC. These optical lowpass filters 21po2aA and 21po2aB are used to remove anti-aliasing noise in an image.

### (Operations in Imaging Device)

As shown in FIG. 8B, in the imaging device according to the second variant of the third embodiment, first, light Lt is incident on the birefringent plates 21po2aA and 21po2aB (as the optical lowpass filters).

At this time, the birefringent plates 21po2aA and 21po2aB branch the light Lt incident from the same optical paths twice. That is, the birefringent plate 21po2aA separates the incident light into a double image in a 45-degree-shifted birefringence axis Xp2aA (in a refraction direction Ma in FIG. 8B). Then, the birefringent plate 21po2aB further separates the incident light into a double image in a 135-degree-shifted birefringence axis Xp2aB (in a refraction direction Mb in FIG. 8B). Thus, in the imaging device, the two birefringent plates 21po2aA and 21po2aB separate the incident light Lt into four points in total, and thus, implement the optical lowpass filters.

Next, the imaging device uses the birefringent plate 21po2aC, and the birefringent plate 21po2aC transmits the s-polarized component of light as it is, and refracts (transmits) the p-polarized component of light in a deflection direction Xp2aC (a refraction direction Mc in FIG. 8B, i.e., a vertical direction).

Thereafter, using the s-polarizer areas 21fs and the p-polarizer areas 21 fp in the area divided filter 21 f, the imaging device causes only the s-polarized component of light to be incident on some of (a first group of) respective light receiving elements 11px in an imaging element 11 selectively; and causes only the p-polarized component of light to be incident on others of (a second group of) the respective light receiving elements 11px in the imaging element 11 selectively.

Thus, using the imaging element 11, the imaging device can receive light (take an image) of only the s-polarized component of the light Lt incident from the same optical paths at the first group of the respective light receiving elements 11px (pixels) (at the base points of the arrows showing the refraction direction Mc) in the imaging element 11; and can receive light (take an image) of only the p-polarized component of the light Lt incident from the same optical paths at the second group of the respective light receiving elements 11px (pixels) (at the end points of the arrows showing the refraction direction Mc) in the imaging element 11.

Thus, according to the imaging device in the second variant of the third embodiment, it is possible to obtain the same advantageous effects as those obtained from the first embodiment.

### (Third Variant of Third Embodiment)

Using FIGs. 8C and 8D, an imaging device according to a third variant of the third embodiment will be described.

### (Configuration of Imaging Device)

FIGs. 8C and 8D partially show a side sectional view and a plan view, respectively, of an imaging device according to the third variant of the third embodiment.

As shown in FIG. 8C, in the imaging device according to the third variant of the third embodiment, optical lowpass filters 21po2cA and 21po2cB are provided on an incident side of a birefringent plate 21po2cC. These optical lowpass filters 21po2cA and 21po2cB are used to remove anti-aliasing noise in an image.

### (Operations in Imaging Device)

As shown in FIG. 8D, in the imaging device according to the third variant of the third embodiment, first, light Lt is incident on the birefringent plates 21po2cA and 21po2cB (as the optical lowpass filters).

At this time, the birefringent plates 21po2cA and 21po2cB branch the light Lt incident from the same optical paths twice. That is, the birefringent plate 21po2cA separates the incident light into a double image in a 45-degree-shifted birefringence axis Xp2cA (in a refraction direction Ma in FIG. 8D). Then, the birefringent plate 21po2cB further separates the incident light into a double image in a 135-degree-shifted birefringence axis Xp2cB (in a refraction direction Mb in FIG. 8D). Thus, in the imaging device, the two birefringent plates 21po2cA and 21p2cB separate the incident light Lt into four points in total, and thus, implement the optical lowpass filters.

Next, the imaging device uses the birefringent plate 21po2cC, and the birefringent plate 21po2cC transmits the s-polarized component of light as it is, and refracts (transmits) the p-polarized component of light in a deflection direction Xp2cC (a refraction direction Mc in FIG. 8D, i.e., a horizontal direction).

Thereafter, using the s-polarizer areas 21 fs and the p-polarizer areas 21fp in the area divided filter 21f, the imaging device causes only the s-polarized component of light to be incident on some of (a first group of) respective light receiving elements 11px in an imaging element 11 selectively; and causes only the p-polarized component of light to be incident on others of (a second group of) the respective light receiving elements 11px in the imaging element 11 selectively.

Thus, using the imaging element 11, the imaging device can receive light (take an image) of only the s-polarized component of the light Lt incident from the same optical paths at the first group of the respective light receiving elements 11px (pixels) (at the base points of the arrows showing the refraction direction Mc) in the imaging element 11; and can receive light (take an image) of only the p-polarized component of the light Lt incident from the same optical paths at the second group of the respective light receiving elements 11px (pixels) (at the end points of the arrows showing the refraction direction Mc) in the imaging element 11.

Thus, according to the imaging device in the third variant of the third embodiment, it is possible to obtain the same advantageous effects as those obtained from the first embodiment.

### (Fourth Embodiment)

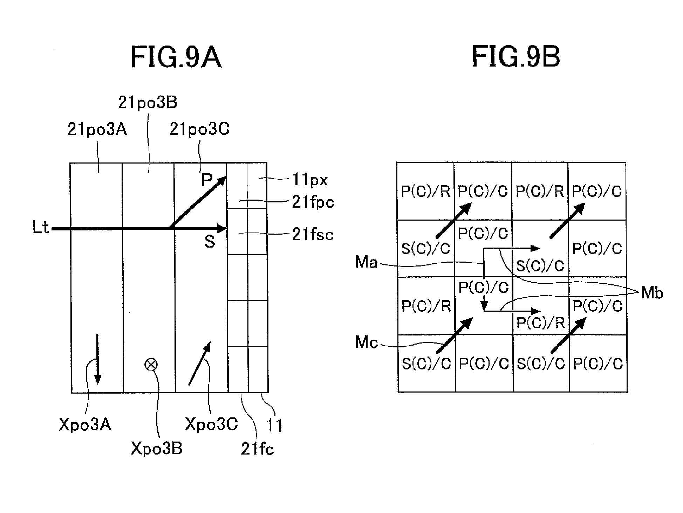

Using FIGs. 9A and 9B, an imaging device according to a fourth embodiment using a color sensor as an imaging element 11 (imaging member 10) will now be described. According to the imaging device in the fourth embodiment, as the color sensor 11, one having a RCCC pattern mentioned above is used.

In the imaging device according to the fourth embodiment, the same as the above-mentioned respective embodiments and variants, a birefringent plate 21po3C branches incident light into a polarization component having a first polarization direction and a polarization component having a second polarization direction perpendicular to the first polarization direction (for example, an s-polarized component and a p-polarized component, respectively).

An area divided filter 21fc includes first polarizer areas 21fsc and second polarizer areas 21fpc (see FIG. 9A) as divisions thereof. The first polarizer areas 21fsc transmit only a polarization component of light having the first polarization direction and the second polarizer areas 21 fpc transmit only a polarization component of light having the second polarization direction.

However, according to the fourth embodiment, the above-mentioned first polarization direction is, for example, an oblique direction shifted +45 degrees from one of the vertical direction or the horizontal direction in the grid pattern of the plurality of light receiving elements 11px in FIG. 9B. The above-mentioned second polarization direction is also an oblique direction shifted -45 degrees from the one of the vertical direction or the horizontal direction in the grid pattern of the plurality of light receiving elements 11px in FIG. 9B.

According to the fourth embodiment, the polarization transmission angle in the area divided filter 21fc is +45 degree and -45 degrees with respect to the vertical or horizontal direction in the grid pattern. For example, the first polarizer areas 21fsc have the polarization transmission angle of +45 degrees with respect to the horizontal direction in the grid pattern, and the second polarizer areas 21fpc have the polarization transmission angle of -45 (= +135) degrees with respect to the horizontal direction in the grid pattern.

Thus, the imaging device according to the fourth embodiment uses the above-mentioned birefringent plate 21po3C to polarize incident light into 45 degrees with respect to the horizontal or vertical arrangement (grid pattern) of the light receiving elements 11px in the imaging element 11.

Note that according to the second or third variant of the third embodiment described above using FIGs. 8A-8D, the optical lowpass filters 21po2aA and 21po2aB or 21po2cA and 21po2cB separate incident light into four pixels that are obliquely adjacent to each other instead of four pixels that are directly (in a side-by-side manner) adjacent to each other. Therefore, in the imaging device according to the second or third variant of the third embodiment, characteristics in the optical lowpass filters 21po2aA and 21po2aB or 21po2cA and 21po2cB may be insufficient as optical lowpass filters for avoiding aliasing, and as a result, an image may be blurred too much or aliasing noise may remain.

In contrast thereto, according to the fourth embodiment, it is possible to implement ideal optical lowpass filters (21po3A and 21po3B), as will be described later.

### (Configuration of Imaging Device)

FIGs. 9A and 9B partially show a side sectional view and a plan view, respectively, of the imaging device according to the fourth embodiment.

As shown in FIG. 9B, the s-polarizer areas 21fsc ("S(C)/C") and the p-polarizer areas 21fpc ("P(C)/R", "P(C)/C") in the area divided filter 21fc are arranged dispersively to correspond to the pattern in the color sensor 11. Further, as shown in FIG. 9A, the optical lowpass filters 21po3A and 21po3B are provided on the incident side of the birefringent plate 21po3C.

Specifically, in the area divided filter 21 fc according to the fourth embodiment, as shown in FIG. 9B, the p-polarizer areas 21fpc ("P(C)/R" in FIG. 9B) are placed at the R pixels in the color sensor 11.

Further, in the area divided filter 21fc, for each set of the four pixels in the RCCC pattern, the p-polarizer areas 21fpc ("P(C)/C" in FIG. 9B) are placed at the two C pixels, respectively, and the s-polarizer area 21fsc ("S(C)/C" in FIG. 9B) is placed at the other one C pixel.

### (Operations in Imaging Device)

As shown in FIG. 9A, in the imaging device according to the fourth embodiment, first, light Lt is incident on the birefringent plates 21po3A and 21po3B (as the optical lowpass filters).

At this time, the birefringent plates 21po3A and 21po3B branch the light Lt incident from the same optical paths twice. That is, the birefringent plate 21po3A separates the incident light into a double image (in a refraction direction Ma (vertical direction) in FIG. 9B). Then, the birefringent plate 21po3B further separates the incident light into a double image (in a refraction direction Mb (horizontal direction) in FIG. 9B). Thus, in the imaging device, the two birefringent plates 21po3A and 21p3B separate the incident light Lt into four points in total, and thus, implement the optical lowpass filters.

Next, the imaging device uses the birefringent plate 21po3C, and the birefringent plate 21po3C transmits the s-polarized component of light as it is, and refracts (transmits) the p-polarized component of light in a deflection direction Xpo3C (a refraction direction Mc in FIG. 9B, i.e., an oblique direction at 45 degrees).

Thereafter, using the s-polarizer areas 21fsc and the p-polarizer areas 21 fpc in the area divided filter 21 fc, the imaging device causes only the s-polarized component of light to be incident on some of (a first group of) respective light receiving elements 11px in the imaging element 11 selectively; and causes only the p-polarized component of light to be incident on others of (a second group of) the respective light receiving elements 11px in the imaging element 11 selectively.

Thus, as mentioned above, it is possible to implement ideal optical lowpass filters 21po3A and 21po3B as a result of these optical lowpass filters 21po3A and 21po3B having the vertical refraction direction Ma and the horizontal refraction direction Mb. That is, by using the optical lowpass filters 21po3A and 21po3B, it is possible to distribute the incident light to the adjacent four pixels, as shown in the arrows showing the refraction direction Ma and Mb in FIG. 9B.

Further, the imaging device according to the fourth embodiment can receive light of the s-polarized component of the light Lt incident from the same optical paths at the first group of the respective light receiving elements 11px (pixels) having the coordinates corresponding to the base points of the arrows showing the refraction direction Mc) in the imaging element 11; and can receive light of the p-polarized component of the light Lt incident from the same optical paths at the second group of the respective light receiving elements 11px (pixels) having the coordinates corresponding to the end points of the arrows showing the refraction direction Mc) in the imaging element 11.

Therefore, the imaging device can obtain the polarization ratio or the like by calculating the luminance ratio of the light received at the light receiving elements 11px (pixels) having the coordinates corresponding to the base points and having the coordinates corresponding to the end points of the arrows showing the refraction direction Mc.

Thus, according to the imaging device in the fourth embodiment, it is possible to obtain the same advantageous effects as those obtained from the first embodiment.

### (Fifth Embodiment)

Using FIGs. 10A and 10B, an imaging device according to a fifth embodiment using a color sensor as an imaging element 11 (imaging member 10) will now be described. According to the imaging device in the fifth embodiment, as the color sensor 11, one having a Red, Green and Blue (RGB) pattern (a Bayer pattern) is used.

### (Configuration of Imaging Device)

FIGs. 10A and 10B partially show a side sectional view and a plan view, respectively, of an imaging device according to the fifth embodiment.

As shown in FIG. 10B, s-polarizer areas 21 fs ("S/G") and p-polarizer areas 21 fp ("P/R", "P/G" and "P/B") in an area divided filter 21 fc are arranged dispersively to correspond to the pattern in the color sensor 11. Further, as shown in FIG. 10A, the imaging device according to the fifth embodiment further includes a birefringent plate 21po4A on the incident side of the birefringent plate 21po4B.

Specifically, in the area divided filter 21f according to the fifth embodiment, as shown in FIG. 10B, the p-polarizer areas 21fp ("P/R" in FIG. 10B) are placed at the R pixels in the color sensor 11.

Further, in the area divided filter 21f, for each set of the four pixels in the RGB pattern, the p-polarizer area 21fp ("P/G" in FIG. 10B) and the s-polarizer area 21fs ("S/G" in FIG. 10B) are placed at the two G pixels, respectively.

In the area divided filter 21 f according to the fifth embodiment, as shown in FIG. 10B, the p-polarizer areas 21fp ("P/B" in FIG. 10B) are placed at the B pixels in the color sensor 11.

### (Operations in Imaging Device)

As shown in FIG. 10A, in the imaging device according to the fifth embodiment, first, light Lt is incident on the birefringent plate 21po4A.

At this time, the birefringent plate 21po4A branches the light Lt incident from the same optical paths. That is, the birefringent plate 21po4A transmits the s-polarized component of light as it is, and refracts (transmits) the p-polarized component of light in a deflection direction Xpo4A (a refraction direction Ma in FIG. 10B (horizontal direction)).

Next, the imaging device uses the birefringent plate 21po4B, and the birefringent plate 21po4B transmits the s-polarized component of light as it is, and refracts (transmits) the p-polarized component of light in a deflection direction Xpo4B (a refraction direction Mb in FIG. 10B (vertical direction)).

Thereafter, using the s-polarizer areas 21fs and the p-polarizer areas 21fpc in the area divided filter 21f, the imaging device causes only the s-polarized component of light to be incident on some of (a first group of) respective light receiving elements 11px in an imaging element 11 selectively; and causes only the p-polarized component of light to be incident on others of (a second group of) the respective light receiving elements 11px in the imaging element 11 selectively.

Thus, using the imaging element 11, the imaging device can receive light (take an image) of only the s-polarized component of the light Lt incident from the same optical paths at the first group of the respective light receiving elements 11px (pixels) (at the base points of the arrows showing the refraction direction Ma) in the imaging element 11; and can receive light (take an image) of only the p-polarized component of the light Lt incident from the same optical paths at the second group of the respective light receiving elements 11px (pixels) (at the end points of the arrows showing the refraction direction Mb) in the imaging element 11.

Therefore, the imaging device can obtain the polarization ratio or the like by calculating the luminance ratio of the light received at the light receiving elements corresponding to the base points of the arrows showing the refraction direction Ma and the end points of the arrows showing the refraction direction Mb.

Thus, according to the imaging device in the fifth embodiment, it is possible to obtain the same advantageous effects as those obtained from the first embodiment.

### (Sixth Embodiment)

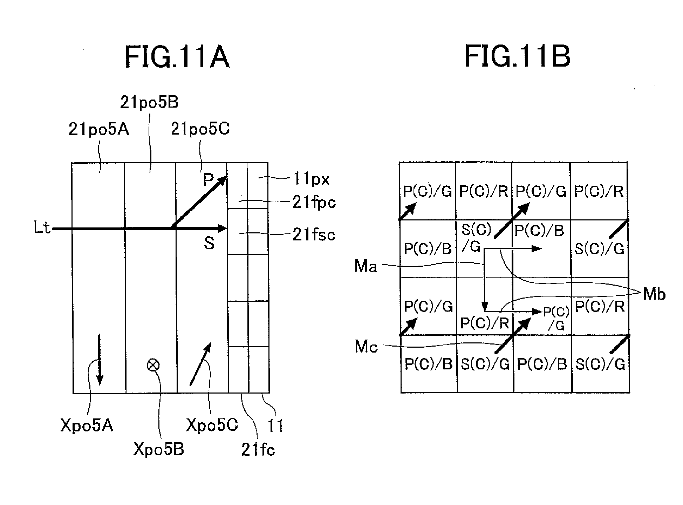

Using FIGs. 11A and 11B, an imaging device according to a sixth embodiment using a color sensor as an imaging element 11 (imaging member 10) will now be described. According to the imaging device in the fifth embodiment, as the color sensor 11, one having a RGB pattern (Bayer pattern) mentioned above is used.

In the imaging device according to the sixth embodiment, the same as the above-mentioned respective embodiments and variants, a birefringent plate 21po5C branches incident light into a polarization component having a first polarization direction and a polarization component having a second polarization direction perpendicular to the first polarization direction (for example, an s-polarized component and a p-polarized component, respectively).

An area divided filter 21fc includes first polarizer areas 21fsc and second polarizer areas 21fpc (see FIG. 11A) as divisions thereof. The first polarizer areas 21 fsc transmit only a polarization component of light having the first polarization direction and the second polarizer areas 21fpc transmit only a polarization component of light having the second polarization direction.

However, according to the sixth embodiment, as in the fourth embodiment mentioned above, the above-mentioned first polarization direction is, for example, an oblique direction shifted +45 degrees from one of the vertical direction or the horizontal direction in the grid pattern of the plurality of light receiving elements 11px in FIG. 11B. The above-mentioned second polarization direction is also an oblique direction shifted -45 degrees from the one of the vertical direction or the horizontal direction in the grid pattern of the plurality of light receiving elements 11px in FIG. 11B.

According to the sixth embodiment, the polarization transmission angle in the area divided filter 21fc is +45 degree or -45 degrees with respect to the vertical or horizontal direction in the grid pattern. For example, the first polarizer areas 21fsc have the polarization transmission angle of +45 degrees with respect to the horizontal direction in the grid pattern, and the second polarizer areas 21fpc have the polarization transmission angle of -45 (= +135) degrees with respect to the horizontal direction in the grid pattern.

Thus, the imaging device according to the sixth embodiment uses the above-mentioned birefringent plate 21po5C to polarize incident light to 45 degrees with respect to the horizontal or vertical arrangement (grid pattern) of the light receiving elements 11px in the imaging element.

Note that according to the second or third variant of the third embodiment described above using FIGs. 8A-8D, the optical lowpass filters 21po2aA and 21po2aB or 21po2cA and 21po2cB separate incident light into four pixels that are obliquely adjacent to each other instead of four pixels that are directly (in a side-by-side manner) adjacent to each other. Therefore, in the imaging device according to the second or third variant of the third embodiment, the characteristics in the optical lowpass filters 21po2aA and 21po2aB or 21po2cA and 21po2cB may be insufficient as optical lowpass filters for avoiding aliasing, and as a result, an image may be blurred too much or aliasing noise may remain.

In contrast thereto, according to the sixth embodiment, as in the fourth embodiment, it is possible to implement ideal optical lowpass filters (21po5A and 21po5B).

### (Configuration of Imaging Device)

FIGs. 11A and 11B partially show a side sectional view and a plan view, respectively, of the imaging device according to the sixth embodiment.

As shown in FIG. 11 B, s-polarizer areas 21fsc ("S(C)/G") and p-polarizer areas 21fpc ("P(C)/R", "P(C)/G" and "P(C)/B") in the area divided filter 21fc are arranged dispersively to correspond to the pattern in the color sensor 11. Further, as shown in FIG. 11A, the optical lowpass filters 21po5A and 21po5B are provided on the incident side of the birefringent plate 21po5C.

Specifically, in the area divided filter 21fc according to the sixth embodiment, as shown in FIG. 11B, the p-polarizer areas 21fpc ("P(C)/R" in FIG. 11B) are placed at the R pixels in the color sensor 11.

Further, in the area divided filter 21fc, for each set of the four pixels in the RGB pattern, the p-polarizer area 21fpc ("P(C)/G" in FIG. 11B) and the s-polarizer area 21fsc ("S(C)/G" in FIG. 11B) are placed at the two G pixels, respectively.

In the area divided filter 21fc according to the sixth embodiment, as shown in FIG. 11B, the p-polarizer areas 21fpc ("P(C)/B" in FIG. 11B) are placed at the B pixels in the color sensor 11.

Note that, as for all of the embodiments and variants described above, the s-polarized areas and the p-polarized area may be replaced, and the lamination order of the respective birefringent plates may be changed.

### (Operations in Imaging Device)

As shown in FIG. 11 A, in the imaging device according to the sixth embodiment, first, light Lt is incident on the birefringent plates 21po5A and 21p5B (as the optical lowpass filters).

At this time, the birefringent plates 21po5A and 21po5B branch the light Lt incident from the same optical paths twice. That is, the birefringent plate 21po5A separates the incident light into a double image (in a refraction direction Ma (vertical direction) in FIG. 11B). Then, the birefringent plate 21po5B further separates the incident light into a double image (in a refraction direction Mb (horizontal direction) in FIG. 11B). Thus, in the imaging device, the two birefringent plates 21po5A and 21po5B separate the incident light Lt into four points in total, and thus, implement the optical lowpass filters.

Next, the imaging device uses the birefringent plate 21po5C, and the birefringent plate 21po5C transmits the s-polarized component of light as it is, and refracts (transmits) the p-polarized component of light in a deflection direction Xpo5C (a refraction direction Mc in FIG. 11B, i.e., an oblique direction at 45 degrees).

Thereafter, using the s-polarizer areas 21fsc and the p-polarizer areas 21fpc in the area divided filter 21fc, the imaging device causes only the s-polarized component of light to be incident on some of (a first group of) respective light receiving elements 11px in the imaging element 11 selectively; and causes only the p-polarized component of light to be incident on others of (a second group of) the respective light receiving elements 11px in the imaging element 11 selectively.

Thus, as mentioned above, it is possible to implement ideal optical lowpass filters 21po5A and 21po5B as a result of these optical lowpass filters 21po5A and 21po5B having the vertical refraction direction Ma and the horizontal refraction direction Mb. That is, by using optical lowpass filters 21po5A and 21po5B, it is possible to distribute the incident light to the adjacent four pixels, as shown in the arrows showing the refraction directions Ma and Mb in FIG. 11B.

Further, using the imaging element 11, the imaging device can receive light (take an image) of only the s-polarized component of the light Lt incident from the same optical paths at the first group of the respective light receiving elements 11px (pixels) having the coordinates corresponding to the base points of the arrows showing the refraction direction Mc in the imaging element 11; and can receive light (take an image) of only the p-polarized component of the light Lt incident from the same optical paths at the second group of the respective light receiving elements 11px (pixels) having the coordinates corresponding to the end points of the arrows showing the refraction direction Mc) in the imaging element 11.

Therefore, the imaging device can obtain the polarization ratio or the like by calculating the luminance ratio of the light received at the light receiving elements 11px (pixels) having the coordinates corresponding to the base points and having the coordinates corresponding to the end points of the arrows showing the refraction direction Mc.

Thus, according to the imaging device in the sixth embodiment, it is possible to obtain the same advantageous effects as those obtained from the first embodiment.

### (Variant of Fifth Embodiment)

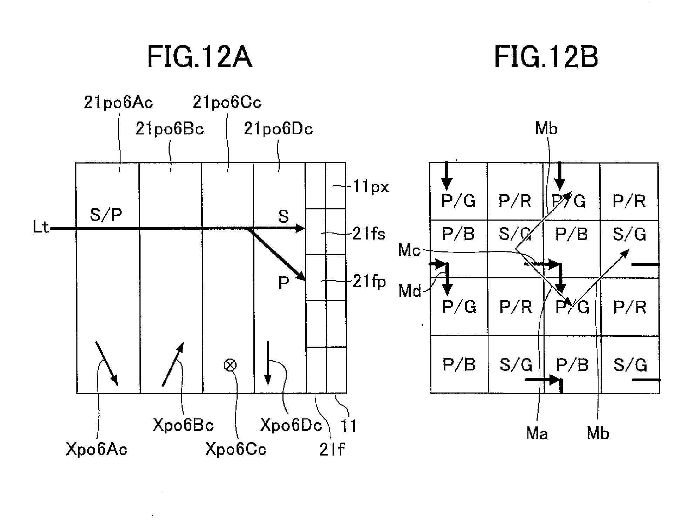

Using FIGs. 12A and 12B, an imaging device according to a variant of the fifth embodiment using a color sensor as an imaging element 11 (imaging member 10) will now be described.

According to the imaging device in the variant of the fifth embodiment, as the color sensor 11, one having a RGB pattern (Bayer pattern) is used as in the fifth embodiment.

### (Configuration of Imaging Device)

FIGs. 12A and 12B partially show a side sectional view and a plan view, respectively, of the imaging device according to the variant of the fifth embodiment.

In comparison with the fifth embodiment described above using FIGs. 10A and 10B, optical lowpass filters 21po6Ac and 21po6Bc are provided, in addition to birefringent plates 21po6Cc and 21po6Dc (corresponding to those 21po4A and 21po4B in the fifth embodiment shown in FIG. 10A).

### (Operations in Imaging Device)

As shown in FIG. 12B, in the imaging device according to the variant of the fifth embodiment, first, light Lt is incident on the birefringent plates 21po6Ac and 21po6Bc (as the optical lowpass filters).

At this time, the birefringent plates 21po6Ac and 21po6Bc branch the light Lt incident from the same optical paths twice. That is, the birefringent plate 21po6Ac separates the incident light into a double image in a 45-degree-shifted birefringence axis (in a refraction direction Ma in FIG. 12B). Then, the birefringent plate 21po6Bc further separates the incident light into a double image in a 135-degree-shifted birefringence axis (in a refraction direction Mb in FIG. 12B). Thus, in the imaging device, the two birefringent plates 21po6Ac and 21po6Bc separate the incident light Lt into four points in total, and thus, implement the optical lowpass filters.

Next, the birefringent plate 21po6Cc branches the light Lt incident from the same optical paths. That is, the birefringent plate 21po6Cc transmits the s-polarized component of light as it is, and refracts the p-polarized component of light in a deflection direction Xpo6Cc (a refraction direction Mc in FIG. 12B (horizontal direction)).

Next, the imaging device uses the birefringent plate 21po6Dc, and the birefringent plate 21po6Dc transmits the s-polarized component of light as it is, and refracts (transmits) the p-polarized component of light in a deflection direction Xpo6Dc (a refraction direction Md in FIG. 12B (vertical direction)).

Thereafter, using the s-polarizer areas 21fs and the p-polarizer areas 21fpc in the area divided filter 21f, the imaging device causes only the s-polarized component of light to be incident on some of (a first group of) respective light receiving elements 11px in an imaging element 11 selectively; and causes only the p-polarized component of light to be incident on others of (a second group of) the respective light receiving elements 11px in the imaging element 11 selectively.

Thus, using the imaging element 11, the imaging device can receive light (take an image) of only the s-polarized component of the light Lt incident from the same optical paths at the first group of the respective light receiving elements 11px (pixels) (at the base points of the arrows showing the refraction direction Mc) in the imaging element 11; and can receive light (take an image) of only the p-polarized component of the light Lt incident from the same optical paths at the second group of the respective light receiving elements 11px (pixels) (at the end points of the arrows showing the refraction direction Md) in the imaging element 11.

Therefore, the imaging device can obtain the polarization ratio or the like by calculating the luminance ratio of the light received at the light receiving elements 11px (pixels) at the coordinates corresponding to the base points of the arrows showing the refraction direction Ma and at the coordinates corresponding to the end points of the arrows showing the refraction direction Mb.

Thus, according to the imaging device in the variant of the fifth embodiment, it is possible to obtain the same advantageous effects as those obtained from the first embodiment.

### (Seventh Embodiment)

A stereo camera according to a seventh embodiment will now be described.

The stereo camera 200 according to the seventh embodiment includes an imaging device according to any one of the above-mentioned embodiments and variants.

Note that the present invention is not limited thereto. The present invention can be applied to also any other apparatus that includes an imaging device according to any one of the above-mentioned embodiments and variants, and a light receiving part that receives light from the outside and provides the received light to the imaging device.

Since the stereo camera 200 includes an imaging device according to any one of the above-mentioned embodiments and variants, mainly parts that are different from the imaging device will be described here.

Note that the imaging device according to any one of the above-mentioned embodiments and variants will be referred to as an imaging device 100 hereinafter, for the sake of convenience.

### (Configuration of Stereo Camera)

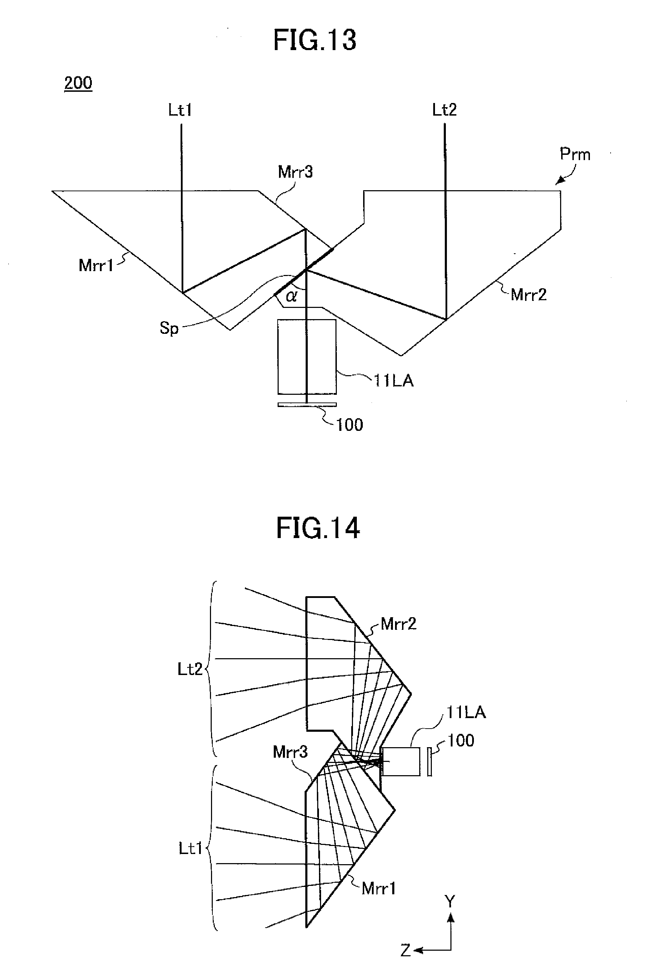

As shown in FIG. 13, the stereo camera 200 according to the seventh embodiment includes a lens array 11LA and the imaging device 100. Further, the stereo camera 200 includes, as a prism Prm, a polarization beam splitter Sp and polarization mirrors Mrr1, Mrr2 and Mrr3.

The polarization beam splitter Sp and the polarization mirrors Mrr1, Mrr2 and Mrr3 are placed on optical paths between a pair of lenses (not shown) and the lens array 11LA.

Note that as the polarization beam splitter Sp, a multilayer film such as a PBS film can be used. Further, it is also possible to use, as the polarization beam splitter Sp, a polarizer (for example, a wire grid) that has stable performance for a wide range of an incident angle and an incident wavelength.

The stereo camera 200 combines light from on optical path and light from another optical path having a parallax, using the polarization beam splitter Sp and the polarization mirrors Mrr1, Mrr2 and Mrr3.

Further, the stereo camera 200 receives thus combined light (takes an image) via the lens array (imaging lens) 11 LA.

That is, in the stereo camera 200 according to the seventh embodiment, light from an optical path and light from another optical path are combined completely before the lens array 11LA, and thus, the light passes through only a single lens (lens array 11LA).

Therefore, in the stereo camera 200, even in a case where characteristics in the lens have been shifted due to the temperature or the like, the position of the lens has been shifted, or the position of the sensor (imaging device 100) has been shifted, the same error occurs in both images (of light from an optical path and light from another optical path, respectively, before being combined). Thus, the stereo camera 200 according to the seventh embodiment can cancel out the influence of the error, and thus, it is possible to implement the environmentally-resistant stereo camera 200.

Further, since only one set of the lens (lens array 11LA) and the sensor (imaging device 100) will do, it is possible to reduce the cost of the stereo camera 200.

It is preferable that the angle α between a light beam at the center of a field angle (the central axis of the lens array 11LA and the imaging device 100) and the polarization beam splitter Sp or the polarization mirrors Mrr1, Mrr2 and Mrr3 is set to be greater than 45 degrees.

That is, as shown in FIG. 14, it is possible to miniaturize the prism Prm by setting the angle α between the light beam at the center of the field angle and the polarization beam splitter Sp or the polarization mirrors Mrr1, Mrr2 and Mrr3 to be greater than 45 degrees.

### (Operations in Stereo Camera)

As shown in FIG. 14, the stereo camera 200 receives light Lt1 and light Lt2 at the imaging device 100 and takes an image for an object (a parallax image, a difference image, a polarized image or the like).

Specifically, the stereo camera 200, first, reflects, in a polarization manner, the p-polarized component of the light Lt1 (that has passed through one of the pair of lenses) coming from the +Z direction to go in the +Y direction, using the polarization mirror Mrr1.

The stereo camera 200 also reflects, in a polarization manner, the s-polarized component of the light Lt2 (that has passed through the other of the pair of lenses) also coming from the +Z direction to go in the -Y direction, using the polarization mirror Mrr2.

The stereo camera 200 then reflects, in a polarization manner, the p-polarized component of the light Lt1 coming from the -Y direction to go in the -Z direction, using the polarization mirror Mrr3.

Next, the stereo camera 200 reflects the s-polarized light of the light Lt2 coming from the +Y direction to go in the -Z direction, using the polarization beam splitter Sp.

Further, the stereo camera 200 transmits the p-polarized light of the light Lt1 coming from the +Z direction as it is to go in the -Z direction, by the polarization beam splitter Sp.

Thus, the stereo camera 200 can extract an image (hereinafter, referred to as a "polarized image light") that includes the p-polarized image in the +Y direction and the s-polarized image in the -Y direction.

Next, the stereo camera 200 receives the polarized image light that is incident at the imaging device 100 via the lens array 11 LA (takes an image). Note that in the imaging device 100, the area divided filter (not shown in FIG. 14) is placed on the surface of the imaging device 100 and includes the polarizers for the respective pixels. Therefore, the imaging device 100 can receive the polarized image light corresponding to s-polarization and the polarized image light corresponding to p-polarization, respectively.

That is, the stereo camera 200 according to the seventh embodiment can take simultaneously the p-polarized image and the s-polarized image.

Further, in the stereo camera 200 according to the seventh embodiment, there is a certain distance (a base length) between the optical paths (optical axes) in incident light Lt1 and the optical paths (optical axes) in incident light Lt2. Therefore, the stereo camera 200 according to the seventh embodiment can take an image (a parallax image, a difference image or the like) having a parallax using the p-polarized image and the s-polarized image.

Further, in comparison with a stereo camera that has two imaging elements (for example, image sensors) and corresponding two imaging lenses (lens arrays), the stereo camera 200 according to the seven the embodiment has the single imaging element and the single imaging lens. Therefore, it is possible to reduce the cost.

Further, in the stereo camera 200 according to the seventh embodiment, the imaging lens is singular, and also, the prisms Prm that correspond to supporting members themselves have small coefficient of thermal expansion with respect to metal in themselves. Therefore, it is possible to reduce an influence of a change in the base length on measurement of a distance.

Note that the stereo camera 200 according to the seventh embodiment can employ a block matching process in a parallax calculation process. It is preferable, for example, to carry out normalization within a block, since, in a stereo camera, a luminance difference based on a polarization ratio of reflected light itself from an object is included in left and right images. By thus carrying out normalization, the stereo camera 200 can cancel out an influence of the luminance difference based on the polarization ratio of the reflected light itself, and thus, can use only a pattern in the parallax calculation.

The stereo camera 200 may employ, for the parallax calculation process, Sum or Absolute Difference (SAD), Sum of Squared Difference (SSD), Zero mean Sum of Absolute Difference (ZSAD), Zero mean Sum of Squared Difference (ZSSD), Zero mean Normalized Cross Correlation (ZNCC) or the like, for example.

Thus, according to the stereo camera 200 in the seventh embodiment, it is possible to obtain the same advantageous effects as those obtained from the imaging device 100 according to the first embodiment.

Further, according to the stereo camera 200 in the seventh embodiment, it is possible to carry out matching in pixels between left and right images with high accuracy, by using the imaging device 100 according to any one of the above-mentioned embodiments and variants.

Further, according to the stereo camera 200 in the seventh embodiment, since it is possible to carry out matching in pixels between the left and right cameras with high accuracy, by using the imaging device 100 according to any one of the above-mentioned embodiments and variants, it is possible to dramatically improve the distance measurement accuracy.

Note that in the imaging device 100, the polarization transmission angles of ±45 degrees can be provided in the area divided filter with respect to the horizontal or vertical arrangement (grid pattern) of pixels in the imaging element (for example, the area divided filter 21fc in the fourth embodiment described above using FIGs. 9A and 9B or the sixth embodiment described above using FIGs. 11A and 11B).

In this case, it is necessary to shift also the axis directions in the polarization multiplexing elements that multiplex left and right images such as the polarization beam splitter Sp and the polarization mirrors Mrr1, Mrr2 and Mrr3 in the stereo camera 200, ±45 degrees with respect to the horizontal or vertical pixel arrangement in the imaging element in the imaging device. Note that "an axis direction in a polarization multiplexing element" is such that only a polarization component of light having a polarization direction coincident with the axis direction is passed through or reflected by the polarization multiplexing element.

Further, in a stereo camera, the values in left pixels should be coincident with the values in the corresponding right pixels, respectively. In the stereo camera 200, in a case where the polarization ratio between s-polarized light and p-polarized light is not equal to 1, the pixel values at the corresponding positions may be shifted due to the influence of the polarization ratio. Such a shift in pixel values may result in degradation in a stereo matching process, and may result in degradation in the distance measurement accuracy. Therefore, it is preferable that the polarization ratio is small as possible in the stereo camera 200 according to the seventh embodiment. Note that the polarization ratio corresponds to the ratio of a plane perpendicular to or parallel with the camera, for example. Therefore, the polarization ratio is reduced when using the imaging device that polarizes light obliquely (for example, ±45 degrees).

That is, in a case of using the stereo camera 200 according to the seventh embodiment as, for example, a car-mounted camera, objects of which images are taken basically includes many vertical and horizontal planes such as power poles on a road, forward vehicles, and so forth. Therefore, when the stereo camera 200 is used in such a manner of being held obliquely with respect to a road surface, it is possible to reduce the polarization ratio.

Therefore, in a case of setting the stereo camera 200 in parallel with the road surface, it is possible to improve the distance measurement accuracy by using the imaging device 100 that has the polarization transmission angles of ±45 degrees in the area divided filter with respect to horizontal or vertical pixel arrangement in the imaging element (grid pattern) (for example, in the area divided filter 21fc in the fourth embodiment described above using FIGs. 9A and 9B or the sixth embodiment described above using FIGs. 11A and 11B).

Further, according to a monocular camera in the related art, the polarization ratio is calculated using polarization components of incident light at different positions (from different optical paths), instead of using polarization components of incident light at the same positions (from the same optical paths). Therefore, as mentioned above, an error may occur in the polarization ratio for an edge area or a texture area.

However, in the stereo camera 200 according to the seventh embodiment, it is possible to obtain the polarization ratio based on polarization components of incident light at the same positions (from the same optical paths). Thus, the stereo camera 200 according to the seventh embodiment has an advantageous effect that it is possible to obtain the more accurate polarization ratio.

According to the embodiments and variants, it is possible to provide imaging devices with which it is possible to improve accuracy/precision in polarized images by receiving a polarization component having a first polarization direction and a polarization component having a second polarization direction perpendicular to the first polarization direction of light incident from the same optical path.

Although the imaging devices and the stereo cameras have been described by the embodiments and variants, the present invention is not limited to the specifically disclosed embodiments and variants, and further variations and modifications may be made without departing from the scope of the present invention.

The present patent application is based on and claims the benefit of priority of Japanese Priority Application No. 2012-281697 filed on December 25, 2012, the entire contents of which are hereby incorporated herein by reference.

## Claims

1. An imaging device for receiving a polarization component of light having a first polarization direction and a polarization component of light having a second polarization direction perpendicular to the first polarization direction, respectively, the imaging device comprising:
a birefringent plate that branches light incident from an optical path into a polarization component having the first polarization direction and a polarization component having the second polarization direction;
an area divided filter that has a first division having a first polarizer area and a second division having a second polarizer area, the first polarizer area transmitting only the polarization component having the first polarization direction and the second polarizer area transmitting only the polarization component having the second polarization direction; and
an imaging element having a plurality of light receiving elements that are two-dimensionally arranged, wherein
the area divided filter has a plurality of the first polarizer areas and a plurality of the second polarizer areas that are arranged to correspond to a grid pattern of the plurality of light receiving elements,
the first polarizer areas and the second polarizer areas in the area divided filter transmit the polarization component of light having the first polarization direction and the polarization component of light having the second polarization direction, branched by the birefringent plate, respectively, and
the plurality of light receiving elements in the imaging element receive the polarization component of light having the first polarization direction and the polarization component of light having the second polarization direction, transmitted by the area divided filter, respectively.

2. The imaging device as claimed in claim 1, wherein
in the area divided filter, the first polarizer areas and the second polarizer areas are arranged in a form of rows or columns, or arranged dispersively or alternately.

3. The imaging device as claimed in claim 1 or 2, wherein
the area divided filter is placed on an optical path between the birefringent plate and the imaging element.

4. The imaging device as claimed in any one of claims 1-3, wherein
the imaging element includes a color filter,
an optical lowpass filter is provided on an incident side of the birefringent plate, and
visible light is incident on the birefringent plate.

5. The imaging device as claimed in claim 4, wherein
the birefringent plate has a first refraction direction, and
the optical lowpass filter comprises another birefringent plate having a second refraction direction different from the first refraction direction by 45 degrees.

6. The imaging device as claimed in any one of claims 1-5, wherein
the birefringent plate includes two birefringent plates, and
the two birefringent plates have respective refraction directions different from one another by 90 degrees.

7. The imaging device as claimed in any one of claims 1-6, wherein
the refraction direction in the birefringent plate is at 45 degrees to a vertical direction or a horizontal direction in the grid pattern.

8. The imaging device as claimed in any one of claims 1-7, wherein
a material of the birefringent plate is quartz crystal.

9. A stereo camera comprising:
the imaging device claimed in any one of claims 1-8;
a pair of lenses; and
a prism on which light transmitted by the pair of lenses is incident,
wherein
the prism combines a polarization component of light having the first polarization direction and a polarization component of light having the second polarization direction respectively transmitted by the pair of lenses to generate combined light,
the generated combined light is incident on the birefringent plate in the imaging device, and the birefringent plate branches the combined light into the polarization component having the first polarization direction and the polarization component having the second polarization direction,
the first polarizer areas and the second polarizer areas in the area divided filter transmit the polarization component having the first polarization direction and the polarization component having the second polarization direction, branched by the birefringent plate, respectively, and
the imaging element receives the polarization component of light having the first polarization direction and the polarization component of light having the second polarization direction, respectively, transmitted by the area divided filter, and obtains an image corresponding to the polarization component of light having the first polarization direction and an image corresponding to the polarization component of light having the second polarization direction as a parallax image.

10. The stereo camera as claimed in claim 9, wherein
the prism is placed on an optical path on an incident side of the birefringent plate, and combines two optical paths having different polarization directions and having a parallax into a single optical path, and
the first polarization direction is at +45 degrees to one of a vertical direction and a horizontal direction in the grid pattern, and
the second polarization direction is at -45 degrees to the one of the vertical direction and the horizontal direction in the grid pattern.
